Europäisches Patentamt

European Patent Office

Office européen des brevets

(19)

(11) Numéro de publication: **0 074 287**
**B1**

(12) # FASCICULE DE BREVET EUROPEEN

(45) Date de publication du fascicule du brevet:
13.11.85

(51) Int. Cl.⁴: **B 32 B 15/08**

(21) Numéro de dépôt: **82401360.1**

(22) Date de dépôt: **22.07.82**

(54) Complexe multicouche, notamment pour la fermeture d'emballages en matière plastique.

(30) Priorité: 26.08.81 FR 8116315

(43) Date de publication de la demande:
16.03.83 Bulletin 83/11

(45) Mention de la délivrance du brevet:
13.11.85 Bulletin 85/46

(84) Etats contractants désignés:
BE CH DE FR GB IT LI NL SE

(56) Documents cités:
EP - A - 0 019 835
FR - A - 2 386 402
FR - A - 2 398 605
FR - A - 2 442 261
FR - A - 2 470 002
FR - A - 2 470 060

Le dossier contient des informations techniques
présentées postérieurement au dépôt de la demande et
ne figurant pas dans le présent fascicule.

(73) Titulaire: COMPAGNIE FRANCAISE DE RAFFINAGE
Société anonyme dite:, 5, rue Michel-Ange,
F-75781 Paris Cedex 16 (FR)

(72) Inventeur: Claude, Bruno, Saint Martin du Manoir,
F-76290 Montivilliers (FR)
Inventeur: Labaig, Jean-Jacques, 176, Boulevard
Clémenceau, F-76600 Le Havre (FR)
Inventeur: Martinez, Christian, 64 Bois Châtaignier Saint
Laurent de Brevedent, F-76700 Harfleur (FR)

(74) Mandataire: Jolly, Jean-Pierre et al, Cabinet
BROT 83, rue d'Amsterdam, F-75008 Paris (FR)

## Description

La présente invention, concerne des complexes multicouches destinés notamment à la fabrication de capsules pour la fermeture d'emballages en matière plastique, comme par exemple, des bouteilles.

Il est connu d'utiliser actuellement, pour fermer des corps creux constitués par exemple de matière plastique ou tout autre type d'emballage, des capsules ou opercules ronds ou d'une autre forme, découpés dans des feuilles multicouches, qui obturent de manière étanche lesdits emballages. Les matériaux généralement employés pour constituer ces capsules de bouchage sont le polyéthylène, le polypropylène, le polychlorure de vinyle ou le polystyrène; l'obturation des emballages par ladite capsule est obtenue par solidarisation du complexe multicouche et de l'emballage par thermoscellage.

Les feuilles multicouches utilisées comprennent principalement une feuille mince d'aluminium, une couche de colle et un film de matière plastique.

A l'aide de capsules faites à partir de tels complexes multicouches, thermoscellées sur les emballages dans des conditions adéquates, on obtient une fermeture étanche, indispensable à la bonne conservation du produit conditionné dans l'emballage.

La nécessité d'une fermeture étanche entraîne cependant pour la capsule plusieurs inconvénients.

En particulier, l'ouverture de l'emballage, au moment de la première utilisation, est peu pratique et il faut employer des instruments pointus ou coupants pour perforer la capsule. Si l'on ne dispose pas de tels instruments, on peut éventuellement perforer la capsule à l'aide d'un doigt ou d'un ongle, mais, dans le cas où les produits conditionnés doivent être gardés stériles aussi longtemps que possible, ces méthodes ne sont pas recommandées.

On a déjà proposé de remédier à ces inconvénients en utilisant un complexe multicouche, que, en plus de l'étanchéité apportée par son thermoscellage sur le goulot du récipient, présente la particularité d'être »pelable«, c'est-à-dire de s'arracher facilement à la main de la surface du goulot au moment de la première utilisation de l'emballage.

La Demanderesse a, en particulier, réalisé de tels complexes qui ont fait l'objet des demandes de brevet français n° 2 398 605, 2 442 261 et 2 470 002. FR-A-2 398 605 décrit des complexes tricouches comprenant une feuille métallique ayant une épaisseur comprise entre 40 et 60 micromètres, une couche de polyoléfine ayant une épaisseur comprise dé préférence entre 5 et 60 micromètres et une couche d'une copolymère greffé liant la feuille métallique et la couche de polyoléfine. De préférence, le copolymère greffé est du polyéthylène et/ou du polypropylène greffés et la couche le contenant a une épaisseur comprise entre 1 et 30 micromètres.

FR-A-2 470 002 décrit des complexes bicouches comprenant une feuille métallique et une couche adhésive constituée par un mélange de deux composés A et B:

— le composé A étant un copolymère d'une monooléfine aliphatique et d'un acide carboxylique monoéthylénique non saturé, ayant une bonne adhérence vis-à-vis de la feuille métallique et du récipient,
— le composé B étant un composé apte à diminuer l'adhérence du composé A vis-à-vis de la feuille métallique et/ou du récipient, et étant choisi dans le groupe constitué par le polyisobutylène, le polystyrène, la »paraffine«, la »cire«, et les copolymères de l'éthylène et du propylène.

La demande n° 2 442 261 décrit ainsi un complexe bicouche comprenant une feuille d'aluminium et une couche adhésive composée de deux copolymères, ces deux copolymères étant respectivement des copolymères greffés obtenus par polymérisation de l'éthylène ou du propylène et greffage sur le polyéthylène ou le polypropylène d'un acide carboxylique monoéthylénique non saturé.

Ce complexe donne toute satisfaction, d'une façon générale, pour la fermeture de bouteilles de lait, en particulier pour la fermeture de bouteilles de lait dit »UHT« (ultra haute température), pour lesquelles le remplissage des bouteilles par du lait stérilisé à haute température (150° C environ) se fait dans des conditions stériles, le thermoscellage de la bouteille dans des conditions stériles intervenant ensuite.

Il peut se produire que la fermeture de la bouteille ne soit pas étanche dans un certain nombre de cas, d'ailleurs peu fréquents. Dans le cas du lait dit »stérilisé«, par exemple, la bouteille est remplie avec du lait n'ayant subi aucun traitement thermique; le thermoscellage est effectué, puis la stérilisation du lait est réalisée en plaçant la bouteille dans un stérilisateur à 125° C, pendant environ 15 minutes. Le traitement thermique effectué lors de la stérilisation peut nuire à l'étanchéité de la bouteille dans un nombre de cas limités. Néanmoins, la Demanderesse cherché à mettre au point un complexe permettant d'obtenir, autant que possible, des récipients étanches fermés par ce complexe.

Elle y est parvenue avec un complexe tricouche comprenant:

a) une feuille métallique,
b) un film de polyoléfine,
c) une couche adhésive liant la feuille métallique et le film de polyoléfine et constituée de deux composés A et B,
le composé A étant un copolymère d'une monooléfine aliphatique et d'un acide carboxylique monoéthylénique non saturé ayant une bonne adhérence vis-à-vis de la feuille métallique et du film de polyoléfine,
le composé B étant un composé apte à diminuer l'adhérence du composé A vis-à-vis de la feuille métallique et/ou du film de polyoléfine.

De tels complexes tricouche sont décrits dans la demande de brevet europeen n° 47 705 dont la Demanderesse est titulaire. — Cette demande décrit des complexes comprenant une couche a) d'épaisseur de 50 micromètres, une couche b) d'épaisseur comprise entre 3 et 6 micromètres et une couche c) ainsi d'épaisseur de 50 micromètres. Ladite demande fait partie de l'état de la technique au sens de l'Art. 54 (3) de la CBE.

Cependant, en poursuivant ses travaux, la Demanderesse a mis au point un complexe plus efficace, en optimisant l'épaisseur des différents composants du complexe.

Le but de la présente invention est donc la mise au point d'un complexe pelable et étanche destiné notamment à l'obturation d'une bouteille de lait stérilisé.

A cet effet, l'invention a pour objet un complexe multicouche, destiné notamment à la fabrication d'opercules ou de capsules pour la fermeture d'un récipient, ce complexe comprenant:

a) une feuille métallique,
b) un film de polyoléfine,
c) une couche adhésive liant la feuille métallique et le film de polyoléfine constituée de deux composés A et B,
le composé A étant un copolymère d'une monooléfine aliphatique et d'un acide carboxylique monoéthylénique non saturé ayant une bonne adhérence vis-à-vis de la feuille métallique et du film de polyoléfine,
le composé B étant un composé apte à diminuer l'adhérence du composé vis-à-vis de la feuille métallique et/ou du film de polyoléfine,
ce complexe étant caractérisé en ce que ladite feuille métallique a une épaisseur comprise entre 25 et 75 micromètres, en ce que ledit film de polyoléfine a une épaisseur comprise entre 10 et 30 micromètres, et en ce que ladite couche adhésive a une épaisseur comprise entre 0,5 et 6 micromètres.

Le composé A est un copolymère d'une monooléfine aliphatique et d'un acide carboxylique monoéthylénique non saturé et peut être notamment obtenu par polymérisation du propylène et greffage d'une faible quantité, en général moins de 5% en poids, d'un acide carboxylique non saturé; cet acide peut être par exemple l'acide acrylique ou méthacrylique.

Dans le cas où le composé A est un copolymère du propylène tel que défini ci-dessus, le film de polyoléfine peut être du polypropylène, le composé B peut être alors un copolymère de l'éthylène et d'un acide carboxylique monoéthylénique non saturé.

Ce copolymère de l'éthylène peut être notamment obtenu par polymérisation de l'éthylène et greffage d'une faible quantité, en général moins de 5% en poids d'un acide carboxylique monoéthylènique non saturé; cet acide peut être par exemple l'acide acrylique ou méthacrylique.

La couche adhésive peut, d'un façon générale, contenir de 20 à 80% en poids du composé A et de 80 à 20% en poids du composé B, et de préférence de 80 à 60% en poids du composé A et de 20 à 40% en poids du composé B.

La feuille métallique, par exemple une feuille d'aluminium, a une épaisseur comprise entre 25 et 75 micromètres et, de préférence, entre 30 et 70 micromètres.

La couche adhésive a une épaisseur comprise entre 0,5 et 6 micromètres et, de préférence, entre 2 et 5 micromètres.

Le film de polyofine a une épaisseur comprise entre 10 et 30 micromètres et, de préférence, entre 15 et 25 micromètres.

Les complexes multicouches selon l'invention sont, de préférence, préparés par un procédé particulier comprenant les étapes suivantes:

a) la préparation d'une suspension du composé A dans un liquide organique, ladite suspension contenant en suspension ou en solution, le composé B,
b) l'enduction de la feuille métallique par la suspension du composé A, ladite suspension contenant le composé B en suspension ou en solution,
c) l'élimination du liquide organique,
d) la fusion des composés, de façon à obtenir und couche continue des composés sur la feuille métallique,
e) l'association de la feuille métallique enduite de la couche adhésive avec le film de polyoléfine.

La suspension du composé A contenant le composé B peut être obtenue en dissolvant les composés A et B dans un liquide organique, puis en refroidissant la solution obtenue, ledit refroidissement étant de préférence rapide.

Le composé B peut être soluble à température ambiante dans le liquide organique. Dans ce cas, il peut être ajouté à la suspension du composé A obtenue comme indiqué ci-dessus.

On peut ensuite ajouter à la solution obtenue des poudres des composés A et B pour augmenter la concentration de la suspension.

L'enduction de la feuille métallique peut être effectuée par des moyens connus dans la technique. Elle peut être effectuée, par exemple, à l'aide d'un rouleau transfert.

Le liquide organique contenu dans la suspension doit ensuite être éliminé de la feuille métallique, enduite, par séchage du support, par exemple par chauffage dans un tunnel chauffant.

La feuille métallique est ensuite portée à une température suffisante pour que les composés soient fondus. La fusion de la couche de composés peut être obtenue en faisant passer la feuille métallique sur un cylindre porté à une température suffisante.

La feuille métallique enduite de la couche adhésive est ensuite rendue solidaire du film de polyoléfine par l'opération de calandrage à haute température.

Les complexes selon l'invention peuvent être utilisés pour la fabrication de capsules ou d'opercules pour la fermeture des récipients. Les complexes peuvent être fixés sur les récipients par une opération de thermoscellage.

Le thermoscellage consiste à appliquer le complexe sur le récipient pendant un temps très court (quelques secondes) à une température qui dépend de la nature du complexe et du récipient. La température doit être suffisante pour que le complexe adhère bien au récipient.

Pour un récipient en polyéthylène, la température de thermoscellage peut être comprise entre 200 et 240°C.

Pour un récipient en polypropylène, la température de thermoscellage peut être comprise entre 210 et 250°C.

Dans le cas d'une utilisation des complexes selon l'invention pour la fabrication de capsules pour la fermeture de récipients, on peut avantageusement prévoir une languette sur la capsule, pour faciliter l'arrachage de celle-ci.

De façon générale, les complexes multicouches selon la présente invention conviennent pour le bouchage de récipients possédant des formes quelconques, tels que barquettes, bouteilles, etc.; ils sont bien adaptés pour former des capsules de fermeture de bouteilles contenant des produits liquides.

Ils sont plus particulièrement indiqués pour la fermeture de bouteilles de lait stérilisé, où la bouteille, une fois remplie de lait et fermée, doit subir un traitement thermique à environ 125°C lors de la stérilisation.

L'exemple qui suit est destiné à illustrer l'invention.

### Exemple

Cet exemple concerne un complexe multicouche selon l'invention et des essais d'étanchéité et de pelabilité effectués sur des récipients obtenus avec ledit complexe.

### Préparation du complexe multicouche

On prépare d'abord une suspension S1, par dissolution dans de l'heptane à 150°C de deux copolymères A et B: le copolymère A est un polypropylène de grade 2 (selon la norme ASTM D 1238, charge 2,16 kg à 230°C), contenant 1% en poids d'acide arylique greffé; il est ajouté en quantité telle que sa concentration dans la solution soit de 4,2% en poids.

Le copolymère B est un polyéthylène greffé de haute densité (d = 0,960), de masses moléculaires en poids $M\bar{w} = 110\,000$ et en nombre $M\bar{n} = 13\,000$, contenant 1% en poids d'acide acrylique greffé. Il est ajouté en quantité telle que sa concentration dans la solution soit de 1,8% en poids.

On obtient la suspension S1 en refroidissant brusquement à 40°C la solution.

La suspension finale S est obtenue en dispersant par agitations dans la suspension S1 à 20°C une poudre constituée d'un mélange à 70% en poids de A et à 30% en poids de B.

La poudre est ajoutée en quantité telle que la concentration finale en polymère soit de 18% en poids.

On enduit avec la suspension et à l'aide d'un rouleau de transfert une feuille d'aluminium d'une épaisseur de 50 micromètres.

On fait passer ensuite la feuille enduite dans un tunnel de 120°C pour éliminer le solvant, puis sur un cylindre porté à 240°C pour fondre le dépôt.

On obtient ainsi un complexe bicouche, qui est calandré à 240°C entre deux cylindres avec un film de polypropylène d'une épaisseur de 20 micromètres.

On obtient ainsi le complexe multicouche selon l'invention.

### Essais d'étanchéité

Le complexe est scellé à 230°C pendant 4 secondes, l'écrasement étant de 3 mm, sur des bouteilles en polyéthylène haute densité (d = 0,960) de masses moléculaires en poids $M\bar{w} = 100\,000$ et en nombre $M\bar{n} = 12\,000$ et contenant du lait.

La stérilisation est effectuée à 125°C, pendant 15 minutes, dans un stérilisateur, sous une pression de vapeur d'eau de 2 bars.

Les bouteilles sont placées pendant 10 jours à 40°C dans une étuve.

On ne constate aucune fuite sur 1000 bouteilles testées.

### Essais de pelabilité

On mesure les efforts d'arrachage du complexe scellé sur les bouteilles à l'aide d'un appareil d'essais en traction des matières plastique INSTRON, muni d'un équipement spécial maintenant la bouteille solidement par son goulot dans une mâchoire inférieure mobile, une mâchoire supérieure fixe immobilisant la capsule par la languette; l'effort d'arrachage est exercé dans un plan sensiblement perpendiculaire au plan de soudage de la capsule sur le goulot.

Les capsules sont ainsi arrachées de la surface du goulot des bouteilles sans déchirure et d'une manière totale. L'effort de traction est exercé à une vitesse constante de 500 mm/minute.

Les efforts de pelage relevés sont de l'ordre de 1 daN.

Ces essais montrent que les complexes selon l'invention sont pelables, tout en restant étanches, car, selon le test employé des valeurs de force de pelage allant de 0,6 à 1,25 daN, peuvent être considérées comme satisfaisantes.


## Revendications

1. Complexe multicouche, destiné notamment à la fabrication d'opercules ou de capsules pour la fermeture d'un récipient, ce complexe comprenant,

a) une feuille métallique,
b) un film de polyoléfine,
c) une couche adhésive liant la feuille métallique et le film de polyoléfine constituée de deux composés A et B:
  — le composé A étant un copolymère d'une monooléfine aliphatique et d'un acide carboxylique monoéthylénique non saturé ayant une bonne adhérence vis-à-vis de la feuille métallique et du film de polyoléfine,
  — le composé B étant un composé apte à diminuer l'adhérence du composé A vis-à-vis de la feuille métallique et/ou du film de polyoléfine, ce complexe étant caractérisé en ce que ladite feuille métallique a une épaisseur comprise entre 25 et 75 micromètres et de préférence, entre 30 et 70 micromètres, en ce que ledit film de polyoléfine a une épaisseur comprise entre 10 et 30 micromètres de préférence entre 15 et 25 micromètres, et en ce que ladite couche adhésive a une épaisseur comprise entre 0,5 et 6 micromètres et de préférence entre 2 et 5 micromètres.

2. Complexe selon la revendication 1, caractérisé en ce que la feuille métallique est une feuille d'aluminium.

3. Complexe selon l'une des revendications 1 et 2, caractérisé en ce que:

— le composé A est un copolymère du propylène et de l'acide acrylique,
— le composé B est un copolymère de l'éthylène et de l'acide acrylique,
— le film de polyoléfine est un film de polypropylène.

4. Application du complexe selon l'une des revendications 1 à 3, à la fermeture de récipient, caractérisé en ce que le récipient est une bouteille de polyéthylène haute densité destinée à contenir du lait stérilisé.


## Patentansprüche

1. Mehrschichtverbundmaterial, insbesondere zur Herstellung von Deckeln oder Kapseln zum Verschließen eines Behälters, bestehend aus

a) einer Metallfolie,
b) einem Polyolefinfilm und
c) einer die Metallfolie sowie den Polyolefinfilm verbindenden Klebeschicht, welche sich aus zwei Verbindungen A und B zusammensetzt, wobei es sich bei der Verbindung A um ein Copolymerisat eines aliphatischen Monoolefins und einer ungesättigten, monoäthylenischen Carbonsäure mit gutem Haftvermögen gegenüber der Metallfolie und dem Polyolefinfilm sowie bei der Verbindung B um eine solche handelt, welche in der Lage ist, das Haftvermögen der Verbindung A gegenüber der Metallfolie und/oder dem Polyolefinfilm zu vermindern,

dadurch gekennzeichnet, daß die Metallfolie eine Dicke zwischen 25 und 75 Mikron, vorzugsweise zwischen 30 und 70 Mikron, der Polyolefinfilm eine Dicke zwischen 10 und 30 Mikron, vorzugsweise zwischen 15 und 25 Mikron, und die Klebeschicht eine Dicke zwischen 0,5 und 6 Mikron, vorzugsweise zwischen 2 und 5 Mikron, aufweist.

2. Verbundmaterial nach Anspruch 1, dadurch gekennzeichnet, daß es sich bei der Metallfolie um eine Aluminiumfolie handelt.

3. Verbundmaterial nach Anspruch 1 oder 2, dadurch gekennzeichnet, daß es sich bei der Verbindung A um ein Propylen/Acrylsäure-Copolymerisat, bei der Verbindung B um ein Äthylen/Acrylsäure-Copolymerisat und beim Polyolefinfilm um einen Polypropylenfilm handelt.

4. Verwendung des Verbundmaterials nach Anspruch 1, 2 oder 3 zum Verschließen eines Behälters, dadurch gekennzeichnet, daß es sich beim Behälter um eine Flasche aus Polyäthylen hoher Dichte zur Aufnahme von sterilisierter Milch handelt.


## Claims

1. A multilayered system, intended particularly for the fabrication of covers or caps for the closure of a container, this system comprising:

a) a metal sheet
b) a film of polyolefin
c) an adhesive layer linking the metal sheet and the film of polyolefin and composed of two compounds A and B:
  — the compound A being a copolymer of an aliphatic monoolefin and of an unsaturated monoethylenic carboxylic acid having a good adhesion with the metal sheet and the film of polyolefin.
  — the compound B being a compound capable of diminishing the adhesion of the compound A with the metal sheet and/or the film of polyolefin, this system being characterized in that the said metal sheet has a thickness of between 25 and 75 micrometers and preferably of between 30 and 70 micrometers, that the said film of polyolefin has a thickness of between 10 and 30 micrometers, preferably between 15 and 25 micrometers, and that the said adhesive layer has a thickness of between 0.5 and 6 micrometers and preferably between 2 and 5 micrometers.

2. A system according to Claim 1, characterized in that the metal sheet is a sheet of aluminium.

3. A system according to Claim 1 or Claim 2, characterized in that:

— the compound A is a copolymer or propylene and acrylic acid,
— the compound B is a copolymer of ethylene and acrylic acid,
— the film of polyolefin is a film of polypropylene.

4. Application of the system according to any one of Claims 1 to 3, to the container closure, characterized in that the container is a bottle of high-density polyethylene intended to hold sterilized milk.